# EUROPEAN PATENT APPLICATION

(11) **EP 4 020 146 A1**
(43) Date of publication of application: **29.06.2022**
(21) Application number: 21211887.1
(22) Date of filing: 02.12.2021
(51) Int. Cl.: G06F 3/041, G06F 3/044

(54) **FREQUENCY ANALYSIS METHOD OF TOUCH DETECTION FOR PROJECTED CAPACITIVE TOUCHSCREENS**

(30) Priority: 22.12.2020 US 202017131371
(71) Applicant: Rockwell Collins, Inc., Cedar Rapids, IA 52498 (US)
(72) Inventor: PERREAULT, William G, Marion, 52302 (US); HLADIK, Jakub, West Salem, 54669 (US)
(74) Representative: Dehns

(57) **Abstract**

A method of touch detection for a projected capacitive (PCAP) touch sensor includes generating a set of unique signal frequencies, energizing each row (106) with a unique frequency according to a rotating frequency scheme, receiving column (108) signals as a summation of the row frequencies, processing the column signals using an algorithm such as a fast Fourier transform (FFT) algorithm to deconstruct each column signal, and analyzing the relative magnitudes of the unique row frequencies to identify a change in magnitude to indicate a touch event on the sensor. The method may be implemented in a touch display device, for instance in aircraft avionics displays requiring redundancy.

## Description

### TECHNICAL FIELD

The subject matter disclosed herein relates generally to touchscreen technology, and more particularly to frequency analysis methods of touch detection for projected capacitive (PCAP) touch sensors to enable their use in avionics environments, both in civil certified and other high-criticality installations.

### BACKGROUND

Multi-touch input is an expected and requested feature for new display products across military and commercial avionics market segments. Touch technology enables improved cockpit usability and crew efficiency, with consumer electronic experiences forming expectations for the user interface. PCAP touch sensors provide a user-friendly experience with gesturing, light touch, and multi-touch capabilities. However, susceptibility to electromagnetic interference (EMI) causing false touch event detection has prevented their adoption in avionics displays. PCAP touch sensors offer additional advantages in terms of reliability due to solid state construction and optical improvements including reduced reflection and improved contrast as compared to resistive touch sensors.

Current touchscreen devices generally include a touch sensor and a controller. For PCAP devices, a common touch sensor configuration includes a set of conductors arranged and connected to form rows and columns, wherein the rows and columns are electrically isolated. The points at which the row signals cross over the column signals form nodes. To detect touch events, the controller interacts with the touch sensor to measure the capacitance of each node. When the controller encounters a significant change in the measured capacitance of a node, the change is analyzed to determine if a touch event is occurring. The change in capacitance due to a touch is much lower than the overall capacitance of the touch system, which makes the measurement difficult.

Various methods exist for measuring the capacitance of each node. The resulting measurement must provide enough resolution to make a distinction between a touch event and a non-touch event. Methods for measuring capacitance in touch sensors include relaxation oscillators, charge time, charge transfer, sigma-delta modulation, successive approximation, and resonance change. Each of these methods employs a different method of measuring capacitance to determine the small change induced by a touch.

Avionics present a unique challenge due to the environmental requirements. As such, the aforementioned methods of measured capacitance cannot be used due to radiated electromagnetic emissions and susceptibility to EMI. Many current PCAP controllers utilize a square wave signal to stimulate the touch sensor and measure capacitance, which generates significant levels of radiated harmonic noise that can interfere with other avionics equipment.

Therefore, what is needed is a novel method of touch detection for PCAP touch sensors which enables their use in high-criticality avionics environments along with high-reliability.

### BRIEF SUMMARY

To achieve the foregoing and other advantages, in a first embodiment the present disclosure provides a method of touch detection for a projected capacitive (PCAP) touch sensor comprising a network of row conductors and column conductors capacitively coupled at a plurality of nodes. The method includes generating a frequency set including a plurality of sine wave signals each characterized by a unique row frequency, transmitting the plurality of sine wave signals to the row conductors according to a predetermined rolling frequency scheme, receiving column signals from the column conductors each a summation of the unique row frequencies transmitted on the row conductors, processing the column signals using an algorithm (e.g., fast Fourier transform (FFT) algorithm) to deconstruct each column signal into the unique row frequencies transmitted on the row conductors and the magnitude of each frequency, analyzing the relative magnitudes of the unique row frequencies of the deconstructed column signals, and determining the presence of a touch at one of the plurality of nodes based on a change in the relative magnitude of one of the unique row frequencies.

In some embodiments, the method may further include mapping a status of each of the plurality of nodes including recording the magnitude of the unique row frequency at each respective node and/or reporting a touch event to a coupled processor.

In some embodiments, the rotating frequency scheme for the row conductors requires that each transmitted sine wave signal for each row conductor be different from the most recently transmitted sine wave signal for that same row conductor.

In some embodiments. the frequency spacing between each of the plurality of sine wave signals is equal.

In some embodiments, each of the generating, transmitting, receiving and processing steps may be implemented on a touch controller comprising a plurality of electronic components, and the touch controller may be implemented as one of a microcontroller, a field programmable gate array (FPGA), and an application specific integrated circuit (ASIC).

According to another aspect, the present disclosure provides a PCAP touch system including first and second touch sensors each comprising row conductors and column conductors capacitively coupled at nodes formed at row-column conductor intersections such that signals transmitted on the row conductors propagate to the column conductors at capacitive connections of the nodes, and first and second touch controllers, wherein the first touch controller is coupled to the first touch sensor and the second touch controller is coupled to the second touch sensor, and wherein the first touch sensor and the first controller function independently of the second touch sensor and the second controller.

In some embodiments, the frequency set generated by the first controller may be different from the frequency set of the second controller such that the first and second touch controllers can operate on the respective first and second touch sensors in close proximity without interference.

In some embodiments, the first and second touch sensors may be implemented in a display wherein the first and second touch sensors are separate and positioned side-by-side.

In some embodiments, the first and second touch sensors may be implemented in a display wherein their row conductors and their column conductors are interleaved such that a first set of every other row conductor and every other column conductor is coupled to the first controller, and a second set of every other row conductor and every other column conductor is coupled to the second controller.

This brief summary is provided solely as an introduction to subject matter that is fully described in the detailed description and illustrated in the drawings. This brief summary should not be considered to describe essential features nor be used to determine the scope of the claims. Moreover, it is to be understood that both the foregoing summary and the following detailed description are exemplary and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 shows a schematic diagram illustrating a PCAP touch sensor and controller configuration according to an exemplary embodiment of the present disclosure;
FIG. 2 shows a flowchart of a method of column signal reporting of touch detections according to an exemplary embodiment of the present disclosure;
FIG. 3 shows a schematic diagram illustrating a PCAP display including separate side-by-side touch sensors for redundancy according to an exemplary embodiment of the present disclosure;
FIG 4 shows a schematic diagram illustrating a PCAP display including interlaced touch sensors for redundancy according to an exemplary embodiment of the present disclosure; and
FIG. 5 shows a schematic diagram of a single PCAP sensor circuit in which output sinusoids from two controllers are summed and output to the row conductors in accordance with an exemplary embodiment of the present disclosure.

### DETAILED DESCRIPTION

Before explaining one or more embodiments of the disclosure in detail, it is to be understood that the embodiments are not limited in their application to the details of construction and the arrangement of the components set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

Unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, the present disclosure describes a frequency analysis method for touch detection in PCAP touch sensors, a touch controller for implementing the touch detection method, and touchscreen devices including dual touch sensors and controllers for redundancy.

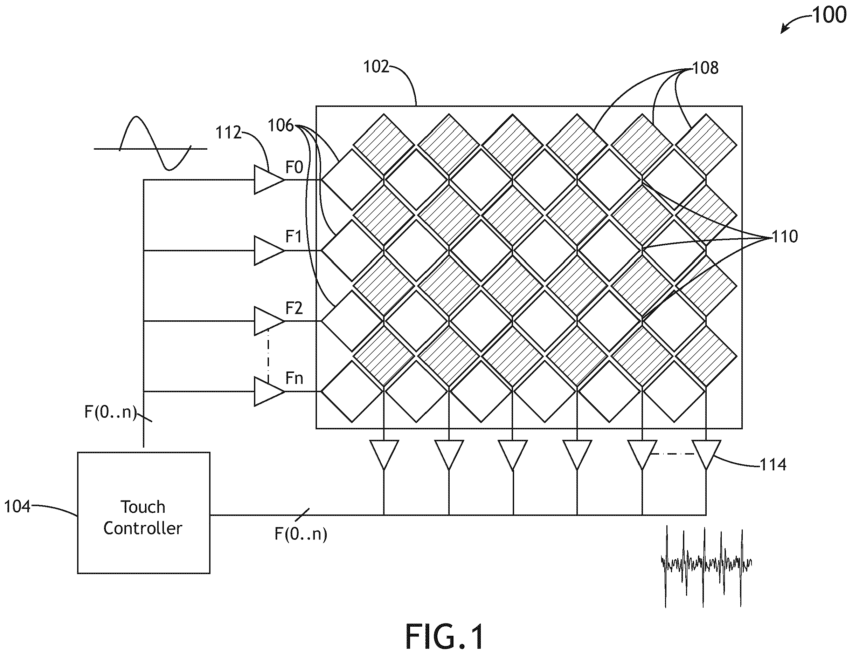

With reference to FIG. 1, a touch sensing system 100 according to an exemplary embodiment of the present disclosure generally includes a touch sensor 102 and a touch controller 104 coupled to the touch sensor 102. The touch sensor 102 generally includes a predetermined number of row conductors 106, illustrated as row conductors F0, F1, F2... Fn, and a predetermined number of column conductors 108, wherein the number of row conductors and the number of column conductors may or may not correspond. The row conductors 106 and the column conductors 108 are electrically isolated and are capacitively coupled at each of a plurality of nodes 110 (i.e., row/column conductor intersections). In some embodiments, the row conductors 106 are the driving conductors, and the column conductors 108 are the sensing conductors.

While a particular matrix of row conductors 106 and column conductors 108 is shown in FIG. 1 as a diamond-shaped grid common in touch sensors due to maximum surface area coverage with minimal overlap, the configuration of the conductors is provided as exemplary only and other configurations are possible and intended in which signals are transmitted on one or more sets of conductors and received on one or more sets of other conductors. Alternative conductor configurations can include, but are not limited to, different shapes, sets and subsets of row and column conductors.

The row conductors 106 and the column conductors 108 are arranged such that signals transmitted on the row conductors 106 propagate to the column conductors 108 at the capacitive connections of the nodes 110. As such, sine wave signals transmitted at individual isolated frequencies on the energized row conductors 106 add to produce compound waveforms (i.e., simultaneous sinusoids) transmitted on the column conductors 108. Each compound waveform therefore consists of a summation of the individual frequencies transmitted on the row conductors 106, as well as any ambient noise transmitted on the column conductors 108. In some embodiments, the touch controller 104 both outputs the row conductor signals and inputs the column conductor signals.

In some embodiments, the touch controller 104 includes a plurality of electronic components each operable for performing a touch detection function including, but not limited to, generation of the row conductor frequency set(s), transmission of the row conductor signals, reception of the column conductor signals, processing of the received column conductor signals, detecting touches, and reporting touches to a higher-level of the system. The physical implementation of the touch controller 104 can take many forms including, but not limited to, microcontrollers, field programmable gate arrays (FPGA), and application specific integrated circuits (ASIC). In some embodiments, the touch controller 104 may be coupled to a processor implemented as special purpose hardware processor or general-purpose processor configured to execute processor-executable code stored in a memory to carry out the functionality described herein. The memory may be implemented as any type of persistent or volatile data storage element and stores data and processor-executable code.

Each row conductor 106 is driven by a driving signal, for instance a sine wave signal (e.g., sinusoid) having a predetermined frequency as output by the touch controller 104 and line driver circuitry 112. In some embodiments, the signal frequencies may be generated by digital means, for instance a digital sine wave generator element of the touch controller 104. In some embodiments, the output signal frequencies may be filtered by a filter bank, with each filter of the filter bank outputting a single signal frequency to its assigned row conductor 106. The single signal assigned to each row conductor 106 is unique for each row conductor such that no two row conductors 106 are energized by the same signal frequency simultaneously. In some embodiments, the touch controller 104 is operable for generating a set of unique driving signal frequencies, referred to herein as the "frequency set," or implementing a frequency set received from a coupled signal generating element, wherein the spacing of the individual frequencies is chosen such that the subsequent analysis of the column signals can separate and distinguish the individual signal frequencies.

In some embodiments, the signal frequencies are selected with sufficient spacing therebetween to be separable and distinguishable by a receiver component of the touch controller 104, for example, 100 kHz signal spacing between row conductors 106. In some embodiments, the predetermined spacing between adjacent signal frequencies (i.e., adjacent row conductors 106) may be constant. In some embodiments, no simple harmonic relationships exist between the selected signal frequencies. In some embodiments, to ensure that the row conductor frequency signals do not interfere with each other due to harmonics caused by the impurities of the generated sinusoid, the frequency set used for the row conductors can be chosen such that the harmonics do not correspond with any of the other fundamental frequencies. The available frequency set may be based upon the desired frequency spacing for each row, and the maximum frequency range. As more frequencies are added to the frequency set, the more the harmonics will overlap the available slots and spread out the overall operation range. In some embodiments, the method may include using prime number multiples of the frequency spacing to avoid overlaps with the fundamental frequencies.

In some embodiments, the compound waveform signals from the column conductors 108 may be buffered and minimally filtered by receiver buffers 114 before being transmitted to the touch controller 104. In some embodiments, the compound waveform signals may be filtered using a low-pass filter to filter out high-frequency noise from normal operation of the touch sensor and/or the filters may be configured to filter out frequencies falling outside of the frequency set.

The touch controller 104 is further operable for receiving and processing the individual compound waveform signals from the individual column conductors 108, which in some embodiments may be buffered and/or filtered. The received compound waveform signals are deconstructed into their individual signal frequencies. In some embodiments, deconstruction is accomplished using a fast Fourier transform (FFT) algorithm wherein the output of the FFT includes a set of the signal frequencies and the magnitude of each signal frequency. In some embodiments, the touch controller 104 may perform a signal frequency deconstruction on the digitized compound waveforms to output a data set of frequency components associated with each of the column conductor signals. In some embodiments, the data set may be limited to a selected frequency range corresponding to the frequency set.

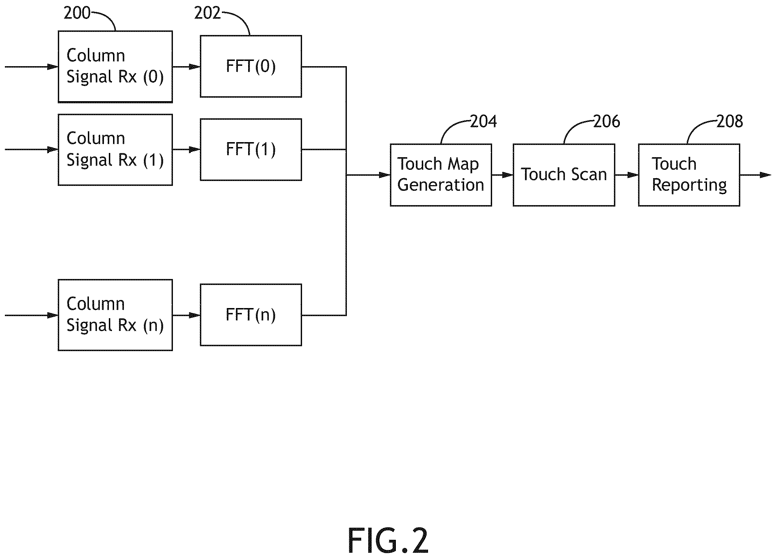

With reference to FIG. 2, in operation, the individual column signals received (Step 200) are deconstructed to provide the complete set of the FFT results (Step 202), which are then used to generate a touch map including the status of each of the nodes (Step 204). In some embodiments, the mapping records the magnitude of the frequency of interest at each of the nodes. The magnitude can be thresholded against a running average for each node to normalize the data, for further processing, for instance to account for capacitance differences across the touch sensor array. The normalized mapping may then be input into more standardized touch detection algorithms, which may include multiple passes through the data to isolate touch positions and interpolate an accurate position (Step 206). Final touch positions are then reported to the higher-level system (Step 208).

In operation, each column conductor of the touch sensor is measured over a predetermined period of time using an analog to digital converter (i.e., digitized). The sample set is then analyzed using the FFT algorithm and the FFT results are used to analyze the relative magnitude of the row conductor frequencies transmitted on each column conductor. A change in magnitude of one of the row frequencies indicates a touch on the row/column node. In other words, a change in the magnitude of a signal frequency of interest is used to determine the presence of a touch event (e.g., screen contact or close proximity gesture), as an object (e.g., finger, stylus, gloved finger, etc.) near a node will introduce an additional capacitance to the touch screen thereby decreasing the magnitude of the signal frequency coupled from a row to a column, and the location of the touch can be determined by analyzing the change in magnitude of the frequency of interest in the deconstructed column signal to determine in which corresponding row the touch occurred.

In some embodiments, each scan by the touch controller may include an output of the frequency set, receipt of the column signals, and deconstruction of the received column signals to identify a change in magnitude in one or more of the row frequencies of interest. Scans may occur periodically according to a predetermined scan rate, for example, approximately every 5 milliseconds such that a single touch will show on multiple successive scans. Touch points are detected by finding magnitude differences exceeding a predetermined threshold value and/or relative to neighboring node values (e.g., vertically, horizontally, and in some cases diagonally adjacent node neighbors). Additional system functionality may include more advanced touch event recognition algorithms such as object tracking over time by comparing successive scans or scan sets.

In some embodiments, to further improve immunity to EMI, the row conductor frequencies may be changed periodically so that a single EMI frequency is not able to affect a single row conductor. Such functionality may be implemented by rotating the row conductor that each unique frequency sine wave is transmitted on. For example, on the initial scan, FO may be transmitted on Row 0, on the second scan F0 may be transmitted on Row 1, and so on for each scan. By using a set of scans with different signal frequencies to measure the capacitive touch sensor, i.e., a rotating frequency method, any external signal frequency noise source will not interfere with the operation of the touch sensor. In some embodiments, the number of signal frequencies in the signal set may correspond directly with the number of row conductors, e.g., 10 rows and 10 signal frequencies. In other embodiments, the number of signal frequencies may exceed the number of row conductors, e.g., 10 rows and 20 frequencies to increase the margin of EMI immunity.

The touch controller 104 according to the present disclosure can be implemented in different touch sensitive display systems generally including a processor, a memory connected to the processor, a display, and a touch sensor applied to the display, for instance in an aircraft avionics display.

In some embodiments, using the frequency analysis method described herein, two touch controllers can operate on sensor conductors in close proximity without interference by carefully choosing two separate frequency sets. As such, redundant touch displays can be achieved as described further below.

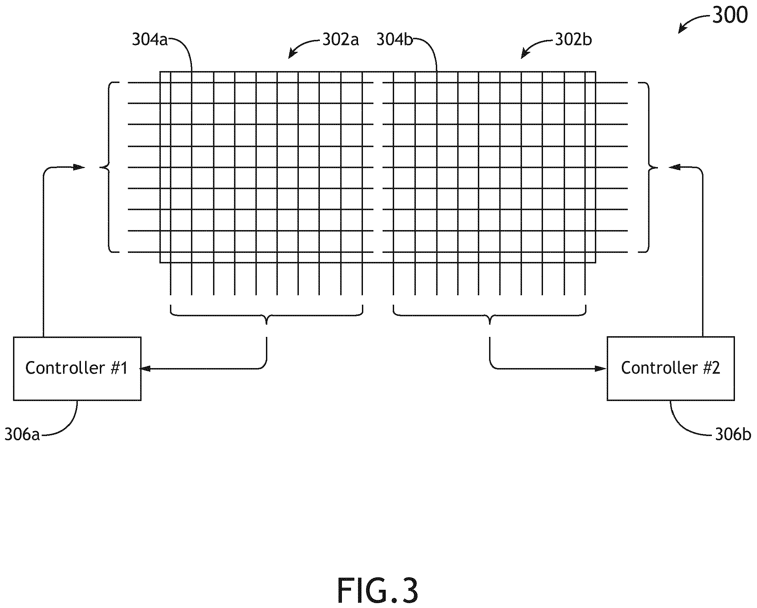

With reference to FIG. 3, an exemplary embodiment of a display is shown at 400 including two separate functioning halves 302a, 302b. Each half includes a dedicated touch sensor 304a, 304b driven by its own dedicated touch controller 306a, 306b. In some embodiments, the two halves operate separately, such that if one half fails the other remains operational. In an alternative embodiment, a touch sensor including a break in the middle of the row conductors could be used to achieve similar redundancy on the touch sensor side.

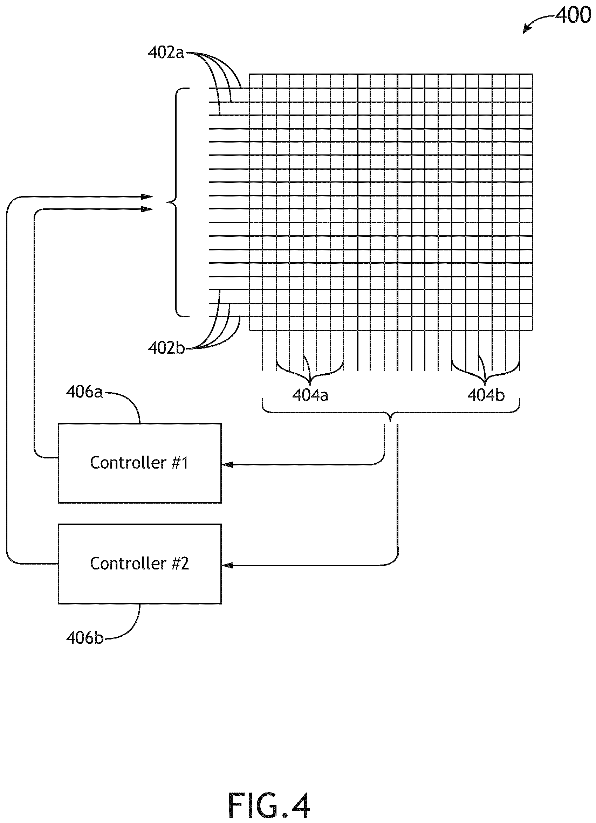

With reference to FIG. 4, an exemplary embodiment of another display is shown at 400 which includes interleaved conductors. In this embodiment, every other row conductor and every other column conductor is driven and sensed by two separate touch controllers. In other words, every other row conductor 402a and every other column conductor 404a is driven by a first touch controller 406a, while every other row conductor 402b and every other column conductor 404b is driven by a second touch controller 406b. Each controller outputs a separate and distinct frequency set to its respective row conductors, and likewise receives column signals from its respective column electrodes.

In some embodiments, the touch sensor may have a standard pitch node pattern (e.g., diamond pattern) wherein in the case of single touch controller failure the resolution would decrease but the touch sensor would still operate. In some embodiments, failure information could be shared with the graphic drawing application and only use areas of the display with good touch sensitivity. In other embodiments, the touch sensor pattern could use smaller pitch nodes where the number of row and column conductors for the same size display is doubled, effectively doubling the resolution when both sensors are operational and in case of a single controller failure, the resolution would remain close to that of a standard pitch node pattern. Other configurations of interleaved row and column conductors are possible and envisioned.

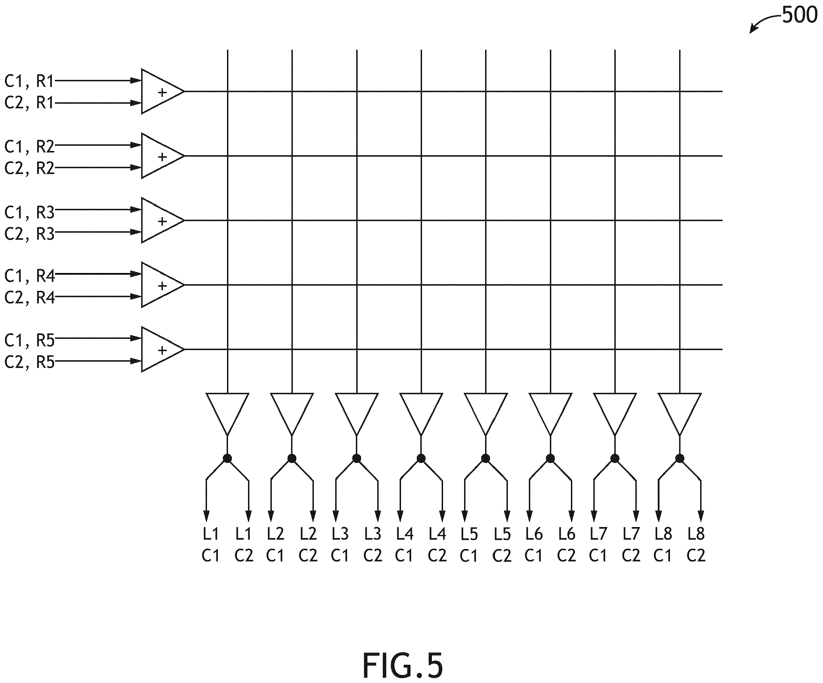

With reference to FIG. 5, in yet another alternative configuration of a sensor circuit shown generally at 500, two individual controllers may each operate to input their unique frequency set to the same row conductors (R1, R2, R3..Rn). In this configuration, the two sinusoids, one from the first controller (C1) and one from the second controller (C2), are added together and are output to the same row conductor (e.g., R1). Each column (L1, L2..Ln) of the sensor branches into two branches with each branch connected to one of the first controller (C1) and the second controller (C2). For example, a 100-column sensor may include 100 column connections connected to the sensor inputs of the first controller (C1) and 100 column connections connected to the sensor inputs of the second controller (C2). By using different frequency sets for the first and second controllers (C1 and C2), each controller operates to analyze its own FFT results of interest while disregarding the FFT results of the other controller.

The touch detection methodologies and hardware for implementing the same provides improved EMI immunity as compared to currently available capacitive touch systems. In addition, the touch detection methodologies further allow for a higher full screen scan rate, thereby reducing touch detection latency, allowing for multiple scans to further verify a touch event and validation while also allowing for redundant operation architectures.

It is believed that the inventive concepts disclosed herein and many of their attendant advantages will be understood by the foregoing description of embodiments of the inventive concepts disclosed, and it will be apparent that various changes may be made in the form, construction, and arrangement of the components thereof without departing from the broad scope of the inventive concepts claimed herein or without sacrificing all of their material advantages. The form herein before described being merely an explanatory embodiment thereof, it is the intention of the following claims to encompass and include such changes.

## Claims

1. A method of touch detection for a projected capacitive (PCAP) touch sensor comprising a network of row conductors (106) and column conductors (108) capacitively coupled at a plurality of nodes (110), the method comprising:
generating a frequency set including a plurality of sine wave signals each **characterized by** a unique row frequency;
transmitting the plurality of sine wave signals to the row conductors according to a rotating frequency scheme in which each transmitted sine wave signal for each row conductor (106) is different from a most recently transmitted sine wave signal for that same row conductor;
receiving column signals from the column conductors (108), each column signal comprising a summation of the unique row frequencies transmitted on the row conductors;
processing the column signals using an algorithm to deconstruct each column signal into the unique row frequencies transmitted on the row conductors;
analyzing the relative magnitudes of the unique row frequencies of the deconstructed column signals; and
determining the presence of a touch at one of the plurality of nodes based on a change in magnitude of one of the unique row frequencies.

2. The method according to claim 1, wherein the number of sine wave signals in the frequency set is equal to or greater than the number of row conductors in the PCAP touch sensor, and wherein the rotating frequency scheme comprises transmitting each of the plurality of sine wave signals to each of the row conductors in repeating sequential order, and wherein no same one of the plurality of sine wave signals is transmitted to more than one of the row conductors simultaneously.

3. The method according to claim 1 or 2, further comprising the step of mapping a status of each of the plurality of nodes including recording the magnitude of the unique row frequency at each respective node.

4. The method according to any preceding claim, further comprising the step of reporting a touch event to a coupled processor.

5. The method according to any preceding claim, wherein the frequency spacing between each of the plurality of sine wave signals is equal.

6. The method according to any preceding claim, wherein each column signal is measured over a predetermined period of time and digitized.

7. The method according to any preceding claim, wherein each of the generating, transmitting, receiving and processing steps is implemented on a touch controller (104) comprising a plurality of electronic components.

8. The method according to claim 7, wherein the touch controller is implemented as one of a microcontroller, a field programmable gate array (FPGA), and an application specific integrated circuit (ASIC).

9. A projected capacitive (PCAP) touch system (100), comprising:
first and second touch sensors (102) each comprising row conductors (106) and column conductors (108) capacitively coupled at nodes formed at row-column conductor intersections (110) such that signals transmitted on the row conductors propagate to the column conductors at capacitive connections of the nodes; and
first and second touch controllers (104) each configured to:
generate a frequency set including a plurality of sine wave signals each **characterized by** a unique row frequency;
transmit the plurality of sine wave signals to the row conductors;
receiving column signals from the column conductors, each column signal comprising a summation of the unique row frequencies transmitted on the row conductors;
process the column signals using an algorithm to deconstruct each column signal into the unique row frequencies transmitted on the row conductors;
analyze the relative magnitudes of the unique row frequencies of the deconstructed column signals; and
determine the presence of a touch at one of the plurality of nodes based on a change in magnitude of one of the unique row frequencies;
wherein the first touch controller is coupled to the first touch sensor and the second touch controller is coupled to the second touch sensor; and
wherein the first touch sensor and the first controller function independently of the second touch sensor and the second controller.

10. The PCAP touch system according to claim 9, wherein the frequency set generated by the first controller is different from the frequency set generated by the second controller such that the first and second touch controllers can operate on the respective first and second touch sensors in close proximity without interference.

11. The PCAP touch system according to claim 9 or 10, wherein, for each of the first controller and the second controller, the plurality of sine wave signals is transmitted to the row conductors according to a rotating frequency scheme in which each transmitted sine wave signal for each row conductor is different from a most recently transmitted sine wave signal for that same row conductor, wherein the number of sine wave signals in the generated frequency set is equal to or greater than the number of row conductors, wherein the rotating frequency scheme comprises transmitting each of the plurality of sine wave signals to each of the row conductors in repeating sequential order, and wherein no same one of the plurality of sine wave signals is transmitted to more than one of the row conductors simultaneously.

12. The PCAP touch system according to claim 9, 10 or 11, wherein the first and second touch sensors are implemented in a display wherein the first and second touch sensors are separate and positioned side-by-side.

13. The PCAP touch system according to any of claims claim 9 to 12, wherein the first and second touch sensors are implemented in a display wherein their row conductors and their column conductors are interleaved.

14. The PCAP touch system according to claim 13, wherein a first set of every other row conductor and every other column conductor is coupled to the first controller, and a second set of every other row conductor and every other column conductor is coupled to the second controller.

15. A projected capacitive (PCAP) touch system (100), comprising:
a touch sensor (102) comprising row conductors (104) and column conductors (108) capacitively coupled at nodes formed at row-column conductor intersections (110) such that signals transmitted on the row conductors propagate to the column conductors at capacitive connections of the nodes; and
first and second touch (104) controllers each configured to:
generate a unique frequency set including a plurality of sine wave signals each **characterized by** a unique row frequency;
transmit the plurality of sine wave signals to the row conductors;
receiving column signals from the column conductors, each column signal comprising a summation of the unique row frequencies transmitted on the row conductors;
process the column signals using an algorithm to deconstruct each column signal into the unique row frequencies transmitted on the row conductors;
analyze the relative magnitudes of the unique row frequencies of the deconstructed column signals; and
determine the presence of a touch at one of the plurality of nodes based on a change in magnitude of one of the unique row frequencies;
wherein the sine wave signals from each of the first and second controllers for each of the row conductors are added and transmitted to the row conductors, and each of the column conductors branch into two column conductors, wherein one branch is connected to an input of the first controller and the other branch is connected to an input of the second controller; and
wherein each of the first and second controllers is operable for analyzing its own deconstructed generated unique frequency set and disregarding the deconstructed unique frequency set of the other controller.
